(19)

Europäisches
Patentamt
European
Patent Office
Office européen
des brevets

(11) **EP 4 597 179 A1**

(12) **EUROPEAN PATENT APPLICATION**
published in accordance with Art. 153(4) EPC

(43) Date of publication:
**06.08.2025 Bulletin 2025/32**

(21) Application number: **23871893.6**

(22) Date of filing: **12.09.2023**

(51) International Patent Classification (IPC):
**G02B 6/032** $^{(2006.01)}$

(52) Cooperative Patent Classification (CPC):
**G02B 6/032**

(86) International application number:
**PCT/JP2023/033160**

(87) International publication number:
**WO 2024/070658 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 JP 2022157789**

(71) Applicant: **SUMITOMO ELECTRIC INDUSTRIES,
LTD.
Osaka-shi, Osaka 541-0041 (JP)**

(72) Inventors:
• **ISHIKAWA, Shinji**
  **Osaka-shi, Osaka 541-0041 (JP)**
• **SATO, Shin**
  **Osaka-shi, Osaka 541-0041 (JP)**
• **ENOMOTO, Tadashi**
  **Osaka-shi, Osaka 541-0041 (JP)**

(74) Representative: **TBK
Bavariaring 4-6
80336 München (DE)**

(54) **ANTIRESONANCE HOLLOW-CORE FIBER**

(57)    An antiresonance hollow-core fiber (100) of the present disclosure is provided with: an outer cladding (120) having a pipe shape extending along a fiber center axis (AX); and a plurality of inner cladding elements (121) that each have a pipe shape and are arranged in an internal region (120b) surrounded by an inner wall surface (120a) of the outer cladding (120), in contact with the inner wall surface (120a) so as to encircle a space forming a core region (110). In a cross section of the internal region (120b), the regions that remain after excluding partial regions occupied by the plurality of inner cladding elements (121) including the internal spaces of the plurality of inner cladding elements (121) are filled with a gas that has a lower optical absorption than $H_2$ in a wavelength band between 1 $\mu$m and 2 $\mu$m inclusive, and a diffusion coefficient smaller than that of Ne.

**FIG. 1**

## Description

TECHNICAL FIELD

The present disclosure relates to an anti-resonant hollow-core fiber. This application claims priority from Japanese Patent Application No. 2022-157789 filed on September 30, 2022, the entire contents of which are incorporated herein by reference.

BACKGROUND ART

As a hollow-core fiber which has been studied in the related art, for example, a Photonic Cristal Hollow-Core Fiber and an Anti-Resonant Hollow-Core Fiber are known. The hollow-core fiber is applied to gas component measurement by spectroscopic measurement. The hollow-core fiber is manufactured by drawing a preform in which a large number of pipes are bundled while heating the preform. The air holes of the hollow-core fiber obtained by this manufacturing method contain gas for controlling pressure during drawing, air, and the like.

The photonic crystal hollow-core fiber is a hollow-core fiber that controls optical confinement by utilizing a photonic band gap, as disclosed in, for example, Non-patent literature 1. In the cladding of the photonic crystal hollow-core fiber, a large number of air holes are arranged so as to constitute a periodic structure of a wavelength order. The cross-sectional area of the space which is surrounded by a large number of air holes and serves as the core region is as small as several tens of $\mu m^2$ to 100 $\mu m^2$. Thus, the injection of the high-pressure gas into the air hole is suppressed.

In the anti-resonant hollow-core fiber, as disclosed in, for example, Patent literature 1 and Non-patent literature 2, the inner region of the outer cladding has a cross section structure in which the inner region is continuous along the fiber central axis. The cross-sectional area is several thousands of $\mu m^2$. Thus, the time for injecting gas from the fiber end face can be greatly reduced as compared with the above-described photonic crystal hollow-core fiber.

CITATION LIST

PATENT LITERATURE

Patent literature 1: Japanese Unexamined Patent Application Publication (Translation of PCT Application) No. 2017-52084

NON PATENT LITERATURE

Non-patent literature 1: O. H. Heckl et al., "Temporal pulse compression in a xenon-filled Kagome-type hollow-core photonics crystal fiber at high average power, "OPTICS EXPRESS, Vol. 19, No. 20, 26 September 2011, p. 19142-19148.
Non-patent literature 2: GREGORY T. JASION et al., "Fabrication of tubular anti-resonant hollow core fibers: modelling, draw dynamics and process optimization," OPTICS EXPRESS, Vol. 27, No. 15, 22 Jul. 2019, p. 20567-20581.

SUMMARY OF INVENTION

An anti-resonant hollow-core fiber of the present disclosure includes an outer cladding having a pipe shape and a plurality of inner cladding elements each having a pipe shape. The outer cladding has a pipe shape extending along a fiber central axis. The plurality of inner cladding elements are disposed in contact with the inner wall surface of the outer cladding so as to surround a space to be a core region. In addition, in a cross section of the anti-resonant hollow-core fiber orthogonal to the fiber central axis, in the inner region surrounded by the inner wall surface of the outer cladding, a region excluding a partial region occupied by the plurality of inner cladding elements, the partial region including an internal space of the plurality of inner cladding elements, is filled with a gas having a light absorptance lower than a light absorptance of $H_2$ in a wavelength band of 1 $\mu m$ to 2 $\mu m$ and a diffusion coefficient smaller than a diffusion coefficient of Ne.

BRIEF DESCRIPTION OF THE DRAWINGS

FIG. 1 is a diagram showing the structure of an anti-resonant hollow-core fiber of the present disclosure.
FIG. 2 is a diagram for explaining the cross section structure of the main part of the anti-resonant hollow-core fiber of the present disclosure together with the cross section structure of the corresponding main part of the photonic crystal hollow-core fiber of the comparative example.
FIG. 3 is a diagram for explaining the calculation of the area ratio in the cross section of the anti-resonant hollow-core fiber of the present disclosure.
FIG. 4 is a drawing for explaining a drawing step in the method for manufacturing the anti-resonant hollow-core fiber of the present disclosure.
FIG. 5 is a drawing for explaining a gas filling step in the method for manufacturing the anti-resonant hollow-core fiber of the present disclosure.
FIG. 6 is a table showing the molecular diameter dependence of the diffusion coefficient of various gases as candidates for the filling gas.
FIG. 7 is a table showing the calculation results of the permeation time from the start to the completion of gas filling for various glass pipes having different pipe inner diameters D, a pipe length L of 25,000 m (=25km), for several kinds of gas among the gases listed in FIG. 6.

FIG. 8 is a table showing the calculation results of the permeation time from the start to the completion of gas filling for various glass pipes having different pipe inner diameters D, and pipe length L of 25,000 m for gas $CF_4$ among the gases listed in FIG. 6.

FIG. 9 is a diagram showing the structure of an experimental system for obtaining the calculation results shown in FIG. 7 and FIG. 8, and a graph showing the calculation results.

FIG. 10 is a graph for explaining the temperature dependence of the permeation time for several kinds of gas among the gases listed in FIGS. 7 and 8.

DETAILED DESCRIPTION

[Problems to be Solved by the Present Disclosure]

The inventors have studied the above-described conventional techniques and have found the following problems. That is, in the above-described conventional techniques, it has been impossible to avoid the entry of gas into the hollow-core fiber from the outside, the disappearance of gas filled in the air hole of the hollow-core fiber due to diffusion, or the entry of gas filled in the air hole of the hollow-core fiber into glass. Thus, the above-described conventional technique has a problem that the transmission loss changes with time due to the refractive index in the air hole filled with gas and the reaction between the gas that has entered and the glass surface. In the above-described conventional technique, since it is assumed that the nonlinear optical effect or light absorption is used and a huge amount of manufacturing time is required, gas filling into a long fiber is not actively performed.

The present disclosure has been made to solve the above-described problems, and an object of the present disclosure is to provide an anti-resonant hollow-core fiber having a structure that enables elongation and stabilization of transmission loss as compared with the conventional techniques.

[Advantageous Effects of Present Disclosure]

According to the anti-resonant hollow-core fiber of the present disclosure, it is possible to achieve a longer fiber length and a more stable transmission loss than in the related art.

[Description of Embodiments of Present Disclosure]

First, the contents of embodiments of the present disclosure will be described by listing them individually. (1) An anti-resonant hollow-core fiber includes an outer cladding having a pipe shape and a plurality of inner cladding elements each having a pipe shape. The outer cladding has a pipe shape extending along a fiber central axis. The plurality of inner cladding elements are each disposed in the outer cladding and in contact with the inner wall surface of the outer cladding so as to surround a space to be a core region. In addition, in a cross section of the anti-resonant hollow-core fiber orthogonal to the fiber central axis, in the inner region surrounded by the inner wall surface of the outer cladding, a region excluding a partial region occupied by the plurality of inner cladding elements, the partial region including an internal space of the plurality of inner cladding elements, is filled with a gas having a light absorptance lower than a light absorptance of $H_2$ (Hydrogen) in a wavelength band of 1 $\mu$m to 2 $\mu$m and a diffusion coefficient smaller than a diffusion coefficient of Ne (Neon).

According to the anti-resonant hollow-core fiber of the present disclosure, the hollow optical waveguide region serving as the core region is filled with gas having a light absorptance lower than a light absorptance of $H_2$ in a wavelength band of 1 $\mu$m to 2 $\mu$m and a diffusion coefficient smaller than a diffusion coefficient of Ne. With this configuration, the change in transmission loss with time is suppressed as compared with the related art. In addition, in the conventional hollow-core fiber utilizing the nonlinear optical effect or light absorption, the gas filling into the long fiber is not positively performed. In contrast, according to the anti-resonant hollow-core fiber of the present disclosure, the gas-filled space to be the hollow optical waveguide region is easily secured, and the gas having a light absorptance lower than that of $H_2$ and a diffusion coefficient smaller than that of Ne is selectively filled in the fiber, so that a stable fiber space in which the change in transmission loss with time is suppressed is obtained. As a result, it becomes possible to extend the fiber space to a length of one km or more. In particular, by filling the inner region of the outer cladding with gas under a pressure of one atm or more, an effect of suppressing deformation of the fiber due to bending or lateral pressure is also expected.

(2) In the above (1), the anti-resonant hollow-core fiber may have a length of 1 km or more. As a result of filling with the gas, the anti-resonant hollow-core fiber can be elongated.

(3) In the above (1) or (2), as an area ratio of a cross section of the anti-resonant hollow-core fiber, a ratio of a total cross-sectional area of the plurality of inner cladding elements to a cross-sectional area of the inner region may be 0.55 or more. In this case, a gas-filled space is sufficiently secured. As a result, the gas filling time can be shortened and the anti-resonant hollow-core fiber can be elongated.

(4) In the above (3), the plurality of inner cladding elements may include 3 to 6 inner cladding elements. When three or more inner cladding elements surrounding the core region are disposed in the outer cladding, the optical confinement effect is exhibited. Further, by limiting the number of inner cladding elements to six or less, the degree of freedom in fiber design for securing a sufficient gas-filled space in a state where the area ratio is satisfied can be improved.

(5) In the above (3) or (4), the inner region may have a diameter of 80 μm or more. When the inner region has a diameter of 80 μm or more, the filling time of the gas is shortened, and an efficient manufacturing becomes possible.

(6) In any one of the above (1) to (5), the gas filled in the anti-resonant hollow-core fiber may include at least one of Ar (argon), Kr (crypton), Xe (xeon), $N_2$ (nitogen), $O_2$ (oxgen), $CF_4$ (tetrafluoromethane), $C_2F_6$ (hexafluoroethane), $CCl_2F_2$ (dichlorodifluoromethane), and $CClF_3$ (chlorotrifluoromethane). That is, the inner region of the outer cladding corresponding to the inner region of the anti-resonant hollow-core fiber may be filled with one kind of gas such as Ar listed here, or a plurality of kinds of gas may coexist in the inner region. With any of the gases, the transmission loss is stabilized as compared with the conventional technique. In particular, in the configuration in which a plurality of kinds of gases coexist in the inner region of the outer cladding, different gas composition distributions can be formed along the longitudinal direction of the anti-resonant hollow-core fiber, and improvement of transmission characteristics and the like can be expected by utilizing the refractive index change along the longitudinal direction.

(7) In any one of the above (1) to (6), a pressure of the gas filled in the anti-resonant hollow-core fiber may be more than 0.101 MPa and less than 70 MPa at a temperature of 25 degrees Celsius. A stable transmission characteristic is maintained, and a change in transmission loss with time is suppressed.

[Details of Embodiments of Present Disclosure]

Specific examples of the anti-resonant hollow-core fiber of the present disclosure will be described in detail below with reference to the accompanying drawings. The present disclosure is not limited to these examples, but is defined by the scope of the claims, and is intended to include all modifications within the meaning and scope equivalent to the scope of the claims. In the description of the drawings, the same elements are denoted by the same reference numerals, and redundant description thereof will be omitted.

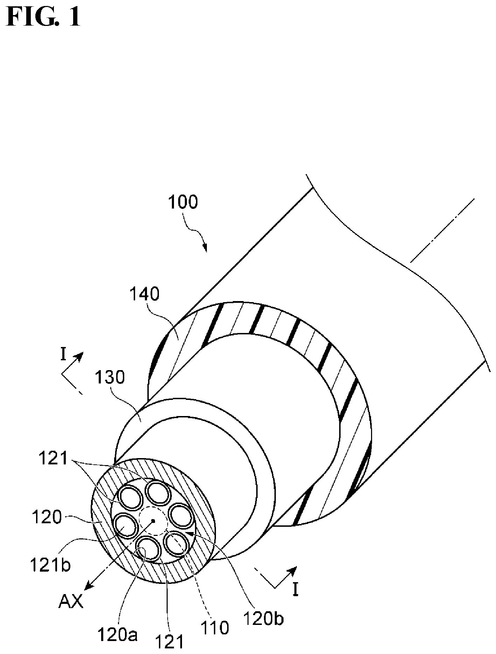

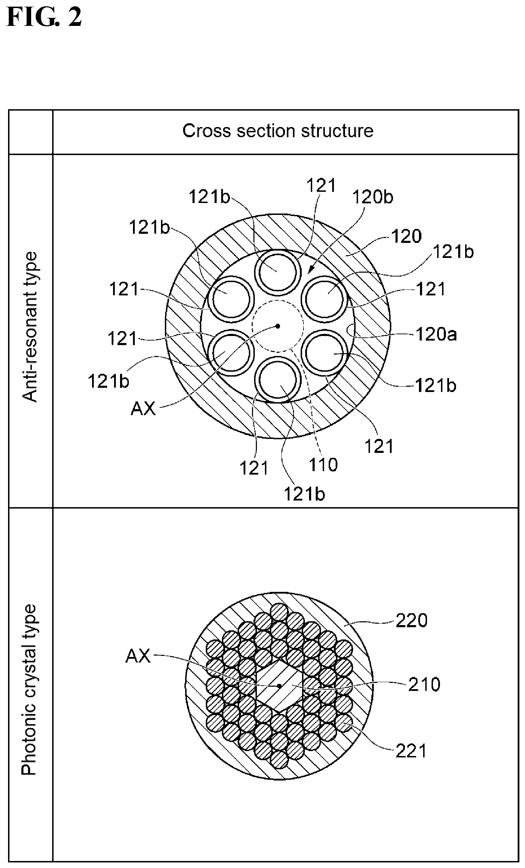

FIG. 1 is a diagram showing the structure of an anti-resonant hollow-core fiber of the present disclosure. FIG. 2 is a diagram for explaining the cross section structure of the main part of the anti-resonant hollow-core fiber of the present disclosure together with the cross section structure of the corresponding main part of the photonic crystal hollow-core fiber of the comparative example (in FIG. 2, referred to as "cross section structure"). The upper part of FIG. 2 (in FIG. 2, referred to as "anti-resonant type") shows a cross-sectional view of a main part of the anti-resonant hollow-core fiber take along the line I-I shown in FIG. 1. The lower part of FIG. 2 (in FIG. 2, referred to as "photonic crystal type") shows, as a comparative example, a cross-sectional view of a main part of the photonic crystal hollow-core fiber corresponding to a cross section take along the line I-I shown in FIG. 1.

As shown in FIG. 1, an anti-resonant hollow-core fiber 100 of the present disclosure includes an outer cladding 120, a plurality of inner cladding elements 121, a jacket layer 130, and a resin covering 140. Outer cladding 120 functions as an optical cladding and has a pipe shape extending along a fiber central axis AX. An inner region 120b surrounded by an inner wall surface 120a of outer cladding 120 corresponds to the inner region of anti-resonant hollow-core fiber 100, and the plurality of inner cladding elements 121 functioning as trench layers are provided in inner region 120b. The plurality of inner cladding elements 121 are disposed so as to surround a space to be a core region 110 functioning as a hollow optical waveguide region, in a state where all of inner cladding elements 121 are in contact with inner wall surface 120a of outer cladding 120. The space that is core region 110 extends along fiber central axis AX. Jacket layer 130 to be a physical cladding is provided on the outer periphery of outer cladding 120. Further, resin covering 140 is provided on the outer periphery of jacket layer 130.

As shown in the upper part of FIG. 2, on the cross section of outer cladding 120 orthogonal to fiber central axis AX, that is, in the cross section of inner region 120b orthogonal to fiber central axis AX, a region excluding a partial region occupied by the plurality of inner cladding elements 121 including an internal space 121b of the plurality of inner cladding elements in inner region 120b surrounded by inner wall surface 120a of outer cladding 120 is filled with a specific gas. Hereinafter, the region filled with gas is referred to as a gas-filled region, and the gas to be filled is referred to as a filling gas. The filling gas has a light absorptance lower than that of $H_2$ and a diffusion coefficient smaller than that of Ne in a wavelength band of 1 μm to 2 μm. The filling gas is selected from, for example, noble gases, general gases, halogenated carbons, or the like. The noble gas may be any one of Ar, Kr, and Xe. The general gas may be any one of $N_2$ and $O_2$. The halogenated carbon may be any one of $CF_4$, $C_2F_6$, $CCl_2F_2$, and $CClF_3$.

The photonic crystal hollow-core fiber shown in the lower part of FIG. 2 as a comparative example includes a common cladding 220, and a large number of air holes 221 are disposed in common cladding 220 so as to surround a hollow optical waveguide region which is to be a core region 210. On the cross section of common cladding 220 orthogonal to fiber central axis AX, that is, in the cross section of the photonic crystal hollow-core fiber, the large number of air holes 221 are disposed so as to constitute a periodic structure in the wavelength order. Light is confined in core region 210 by a photonic band gap generated by the periodic structure.

The space that can be filled with gas in anti-resonant hollow-core fiber 100 shown in the upper part of FIG. 2 is the gas-filled region described above. On the other hand, the space that can be filled with gas in the photonic crystal hollow-core fiber shown in the lower part of FIG. 2 is only core region 210 surrounded by the large number of air holes 221 disposed inside common cladding 220. As described above, the difference in the cross-sectional area of the space capable of being filled with gas between anti-resonant hollow-core fiber 100 of the present disclosure and the photonic crystal hollow-core fiber of the comparative example is significantly large. Such a difference in cross-sectional area is manifested as a difference in permeation time from the start to the completion of gas filling described later.

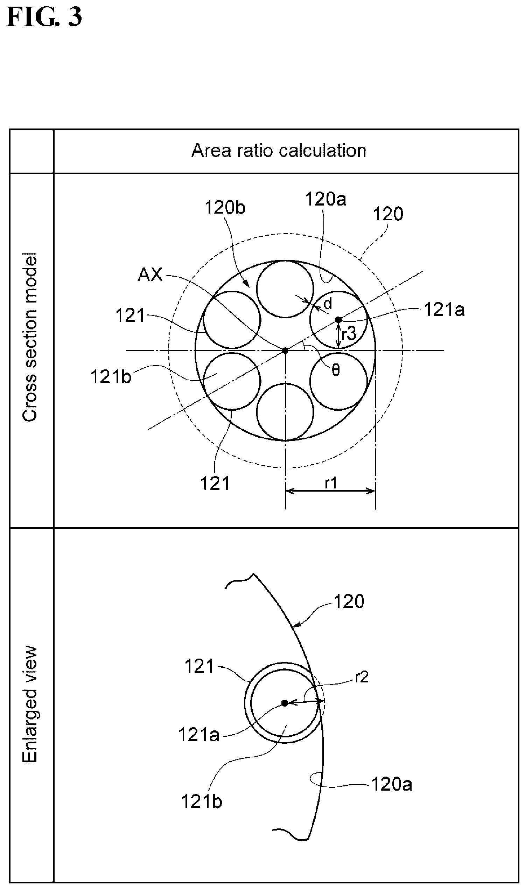

FIG. 3 is a diagram for explaining the calculation of an area ratio in the cross section of anti-resonant hollow-core fiber 100 of the present disclosure (in FIG. 3, referred to as "area ratio calculation"). The upper part of FIG. 3 (in FIG. 3, referred to as "cross section model") shows a cross section model corresponding to the cross section of anti-resonant hollow-core fiber 100 shown in the upper part of FIG. 2. The lower part of FIG. 3 (in FIG. 3, referred to as "enlarged view") conceptually shows or enlarges the actual contact state between outer cladding 120 and one of inner cladding elements 121.

In FIG. 3, r1 is the radius of inner region 120b of outer cladding 120. That is, the distance from center axis AX to inner wall surface 120a of outer cladding 120 is r1. r2 is the radius of inner cladding element 121 from a center 121a to the outer circumferential surface. However, inner cladding element 121 is embedded in inner wall surface 120a of outer cladding 120 as shown in the lower part of FIG. 3. Thus, in the calculation of the area ratio, r3 is used as the correction value. Further, d is the distance between adjacent inner cladding elements 121. $\theta$ is an angle formed by a reference line set on the fiber cross section and a line segment connecting fiber central axis AX and center 121a of inner cladding element 121. A correction value r3 of a radius r2 of inner cladding element 121 is calculated by the equation "r1/(1 + 1/sin ($\pi$/n)) - d/2". n is the number of inner cladding elements 121. Thus, the ratio of the total cross-sectional area of inner cladding element 121 to the cross-sectional area of inner region 120b of outer cladding 120 (hereinafter referred to as "area ratio") is given by $n \times (r3/r1)^2$.

Specifically, as common parameters, a radius r1 of inner region 120b of outer cladding 120 is fixed to 40 $\mu$m, and a distance d between inner cladding elements 121 is fixed to 2 $\mu$m. In this case, qualitatively, the radius of each inner cladding element 121 given by correction value r3 decreases as the number of inner cladding elements 121 in contact with inner wall surface 120a of outer cladding 120 increases. Similarly, the area ratio decreases with an increase in the number of inner cladding elements 121.

For example, when the condition of the number of inner cladding elements 121 is n is equal to 3, correction value r3 of radius r2 and the radius ratio r3/r1 are 17.6 $\mu$m and 0.44, respectively, and the area ratio $n \times (r3/r1)^2$ is 0.58. Note that, when n is smaller than 3, inner cladding element 121 does not function as a trench layer, and thus, three or more inner cladding elements 121 are required. In addition, when n is equal to 4, r3 is 15.6 $\mu$m and r3/r1 is 0.39, and $n \times (r3/r1)^2$ is 0.61. When n is equal to 5, r3 is 13.8 $\mu$m and r3/r1 is 0.35, resulting in $n \times (r3/r1)^2$ is 0.60. When n is equal to 6, r3 is 12.3 $\mu$m and r3/r1 is 0.31, resulting in $n \times (r3/r1)^2$ is 0.57. When n is equal to 7, r3 is 11.1 $\mu$m and r3/r1 is 0.28, resulting in $n \times (r3/r1)^2$ is 0.54. Further, when n is equal to 8, r3 is= 10.1 $\mu$m and r3/r1 is 0.25, resulting in $n \times (r3/r1)^2$ is 0.51. When n is equal to 8 and n is equal to 7, the area ratio $n \times (r3/r1)^2$ is smaller than that in the case of n is equal to 6, and the cross-sectional area of the region surrounded by the two adjacent inner cladding elements 121 and inner wall surface 120a of outer cladding 120 is too small. In this case, it is difficult to replace the gas injected into inner region 120b of outer cladding 120 at a high pressure with the remaining gas. In other words, when inner cladding elements 121 includes seven or more, it is difficult to uniformly fill the anti-resonant hollow-core fiber with gas. As a result, it is impossible to stabilize the optical characteristics such as transmission loss along the fiber central axis of the anti-resonant hollow-core fiber. Thus, in order to secure a sufficient space for filling gas and to realize stable optical characteristics such as transmission loss along the longitudinal direction, inner cladding elements 121 may include six or less, and the area ratio $n \times (r3/r1)^2$ may be 0.55 or more. The above-mentioned radii necessary for calculating the area ratio can be measured by microscopic observation of the end face. Further, inner cladding elements 121 may include three to six, and thus the area ratio may be 0.57 to 0.61. When radius r1 of inner region 120b of outer cladding 120 is larger than 40 $\mu$m, the area ratio may be 0.61 or more.

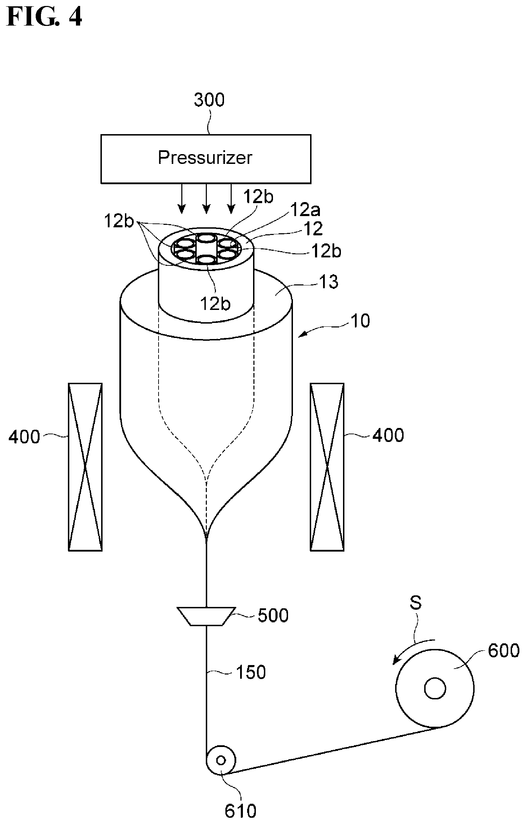

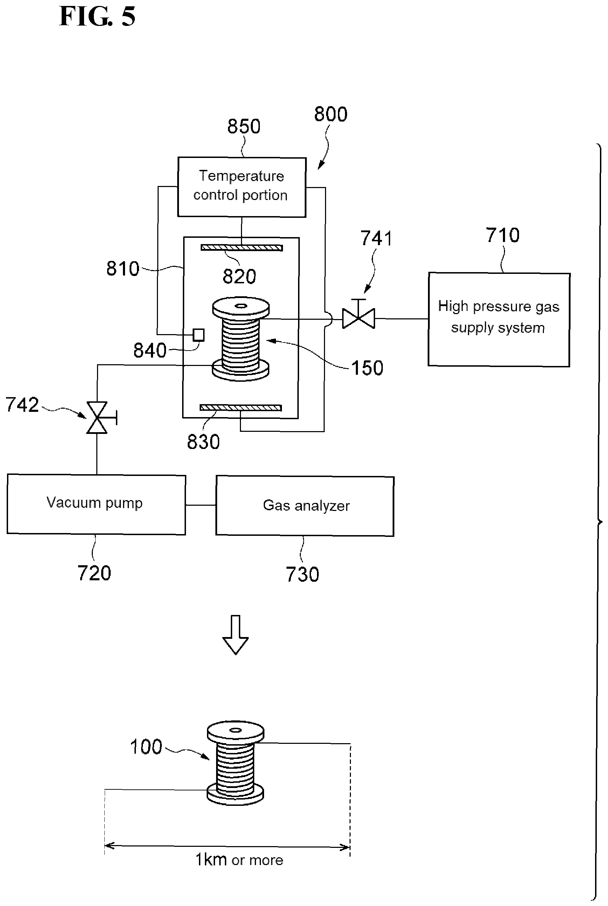

Next, the method for manufacturing anti-resonant hollow-core fiber 100 of the present disclosure will be described in the first half step and the second half step. FIG. 4 is a drawing for explaining a drawing step corresponding to the first half step of the method for manufacturing anti-resonant hollow-core fiber 100 of the present disclosure. FIG. 5 is a drawing for explaining a gas filling step corresponding to the second half step of the method for manufacturing anti-resonant hollow-core fiber 100 of the present disclosure.

The drawing apparatus shown in FIG. 4 includes a pressurizer 300 for pressurizing the inside of an optical fiber preform 10 to be drawn, a heater 400 for heating one end of optical fiber preform 10, a resin covering device 500 for coating a resin on the surface of the hollow glass fiber drawn from optical fiber preform 10, a winding device 600 for winding a fiber intermediate member 150, and a roller 610 for adjusting the traveling direction of fiber intermediate member 150 in order to perform the first half step.

Optical fiber preform 10 is composed of an outer cladding portion 12 having a pipe shape and becoming outer cladding 120 after drawing, a plurality of inner cladding portions 12b having a pipe shape and becoming inner cladding element 121 after drawing, and a jacket portion 13 becoming jacket layer 130 after drawing. In the inner region surrounded by an inner wall surface 12a of outer cladding portion 12, each of the plurality of inner cladding portions 12b is disposed so as to surround the center of outer cladding portion 12 in a state of being in contact with inner wall surface 12a. Jacket portion 13 is provided on the outer periphery of outer cladding 120.

The drum of winding device 600 rotates in the direction indicated by an arrow S, and thereby a hollow glass fiber is drawn from one end of optical fiber preform 10 that has been heated and softened by heater 400. At this time, each of the inner region of outer cladding portion 12 and the inner regions of the plurality of inner cladding portions 12b is supplied with gas or air for pressure control by pressurizer 300, and these inner regions are in a pressurized state so that the pipe shape is not deformed. The surface of the drawn glass fiber is coated with resin by resin covering device 500, and fiber intermediate member 150 is obtained. In fiber intermediate member 150, the inner region of the portion after drawing corresponding to outer cladding 120 and the inner regions of the parts after drawing corresponding to the plurality of inner cladding elements 121 are hollow. Obtained fiber intermediate member 150 is finally wound around a drum of winding device 600 via roller 610.

Further, fiber intermediate member 150 obtained by the drawing apparatus having the above-described structure is set in the apparatus for performing the gas filling step shown in FIG. 5, and the second half step is performed. That is, the apparatus shown in FIG. 5 includes a high pressure gas supply system 710, a vacuum pump 720, and a gas analyzer 730. One end surface of fiber intermediate member 150 is connected to high pressure gas supply system 710 via an on-off valve 741. When the filling gas is supplied from high pressure gas supply system 710 to one end surface of fiber intermediate member 150 through on-off valve 741, the filling gas is supplied to the gas-filled region. Since internal space 121b corresponding to the plurality of inner cladding elements 121 is in a vacuum or decompressed state, the filling gas does not enter the part corresponding to the plurality of inner cladding elements 121. In addition, since the cross-sectional area of internal space 121b corresponding to the plurality of inner cladding elements 121 is small, even when the gas is filled in internal space 121b corresponding to the plurality of inner cladding elements 121, the filling of the gas is not completed within the time required for filling the gas in the gas-filled region.

Vacuum pump 720 is connected to the other end face of fiber intermediate member 150 via an on-off valve 742, and the remaining gas in the inner region of fiber intermediate member 150, that is, the region corresponding to inner region 120b of outer cladding 120 is exhausted by vacuum pump 720. The kind of gas exhausted by vacuum pump 720 is analyzed by gas analyzer 730. When gas analyzer 730 detects the filling gas, it can be confirmed that the filling of the gas is completed and the remaining gas is replaced with the filling gas in the inner region of fiber intermediate member 150 corresponding to inner region 120b of outer cladding 120. After the gas is filled, both ends of anti-resonant hollow-core fiber 100 are hermetically sealed, and the pressure of the gas is maintained at the pressure at the time of sealing. The pressure of the gas filled in anti-resonant hollow-core fiber 100 at the time of sealing is more than 0.101 MPa and less than 70 MPa at a temperature of 25 degrees Celsius. The pressure of the gas during filling can be measured by a pressure gauge provided in high pressure gas supply system 710. The kind of gas filled in anti-resonant hollow-core fiber 100 after filling and the pressure of the gas can be measured by connecting anti-resonant hollow-core fiber 100 to gas analyzer 730 and high pressure gas supply system 710 again. The kind of gas filled in anti-resonant hollow-core fiber 100 after filling and the pressure of the gas filled in anti-resonant hollow-core fiber 100 after filling can also be estimated from the area intensity and peak intensity of a spectrum obtained by spectrometry such as Raman spectroscopy or stimulated Raman scattering.

In the gas filling step, the gas may be filled in a state where fiber intermediate member 150 is accommodated in a constant temperature chamber 800 whose inside is controlled to a constant temperature. Constant temperature chamber 800 includes a housing 810 for accommodating fiber intermediate member 150, a cooling source 820, a heating source 830, a temperature sensor 840, and a temperature control portion 850. Temperature control portion 850 controls cooling source 820 or heating source 830 while monitoring the internal temperature of housing 810 by temperature sensor 840 in order to maintain the internal temperature of housing 810 at a desired set temperature.

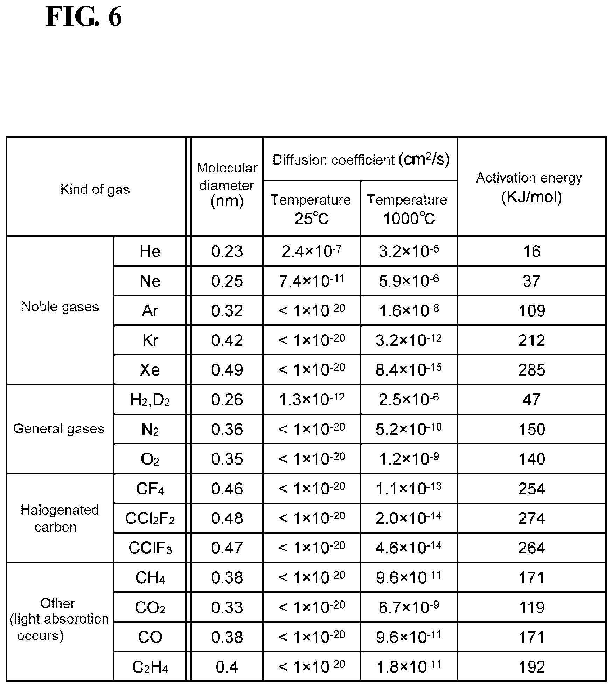

FIG. 6 is a table showing the molecular diameter dependence of the diffusion coefficient of various gases that are candidates for the filling gas applicable to anti-resonant hollow-core fiber 100 of the present disclosure. The table of FIG. 6 shows the molecular diameters (nm), diffusion coefficients ($cm^2/s$), and activation energies (kJ/mol) indicating the temperature dependence of the diffusion coefficients of various gases. The diffusion coefficient at a temperature of 25°C is calculated from the diffusion coefficient at a temperature of 1000°C and the known value of the activation energy.

As can be seen from the table of FIG. 6, the diffusion coefficient decreases as the molecular diameter increases. In particular, focusing on the diffusion coefficient at a temperature of 25°C, the diffusion coefficients of Ar, Kr, and Xe are less than $1 \times 10^{-20}$ $cm^2/s$ in the noble gas, which is smaller than the diffusion coefficient of Ne, and the light absorptance is also lower than $H_2$ in a wavelength band of 1 $\mu$m to 2 $\mu$m. Thus, Ar, Kr, and Xe in the group of noble gases are suitable as the filling gas for anti-resonant hollow-core fiber 100 of the present disclosure. The value of the diffusion coefficient of less than $1 \times 10^{-20}$ $cm^2/s$ is a value at which the diffusion length is 0.1 $\mu$m or less in 15 years. He and Ne have a large diffusion coefficient and are therefore not suitable for the filling gas. In addition, in the general gas, the diffusion coefficients of $N_2$ and $O_2$ are less than $1 \times 10^{-20}$ cm$^2$/s, which are both smaller than the diffusion coefficient of Ne and also lower than the light absorptance of $H_2$. Thus, $N_2$ and $O_2$ among the general gas are suitable for the filling gas. Although the diffusion coefficient of $H_2$ and $O_2$ is smaller than the diffusion coefficient of Ne, light absorption occurs in a wavelength band of 1 $\mu$m to 2 $\mu$m, and thus, these materials are not suitable for the filling gas. In the halogenated carbon, the diffusion coefficients of $CF_4$, $CCl_2F_2$, and $CClF_3$ are less than $1 \times 10^{-20}$ cm$^2$/s, all of which are smaller than the diffusion coefficient of Ne and also have lower light absorptance than $H_2$. Thus, any of the gases listed in the table of FIG. 6 are suitable for the filling gas. As other examples of gas, $CH_4$, $CO_2$, CO, and $C_2H_4$ also have a diffusion coefficient of less than $1 \times 10^{-20}$ cm$^2$/s. However, these gases have a higher light absorptance than $H_2$ in a wavelength band of 1 $\mu$m to 2 $\mu$m, and thus are not suitable for the filling gas.

Although not shown in the table of FIG. 6, $C_2F_6$ as halogenated carbon also has a diffusion coefficient of less than $1 \times 10^{-20}$ cm$^2$/s and a light absorptance lower than $H_2$, and thus is suitable for the filling gas. Further, $H_2$, He, Ne, and the like have small molecular diameters and diffuse in the glass, and thus, there is a possibility that they separate in the radial direction of the hollow-core fiber. Thus, these gases are not suitable as the filling gas for anti-resonant hollow-core fiber 100 of the present disclosure. Further, light absorption due to vibration of C-H bonds and C-O bonds occurs in $CH_4$, $C_2H_6$, $CO_2$, and the like. Thus, the transmission loss is increased, and the gas is not suitable for the filling gas.

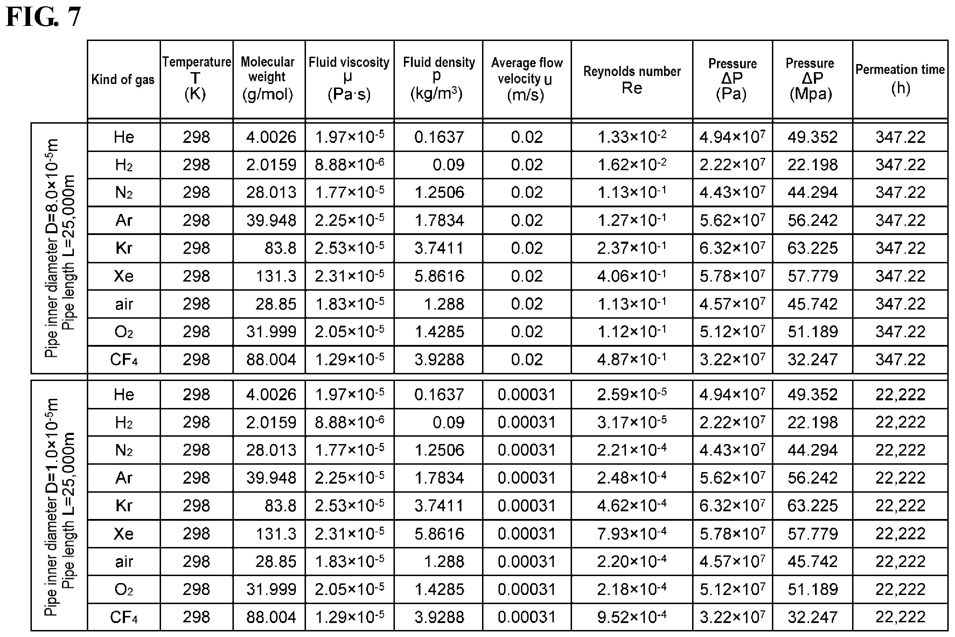

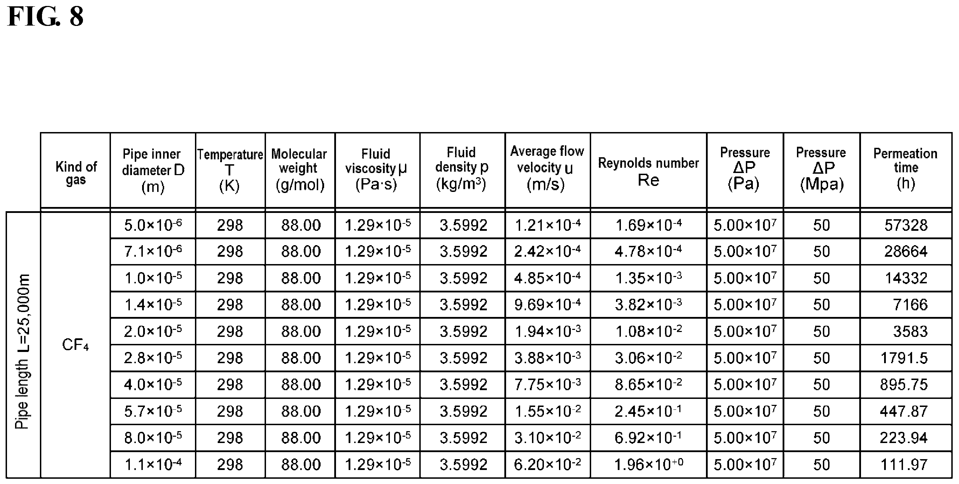

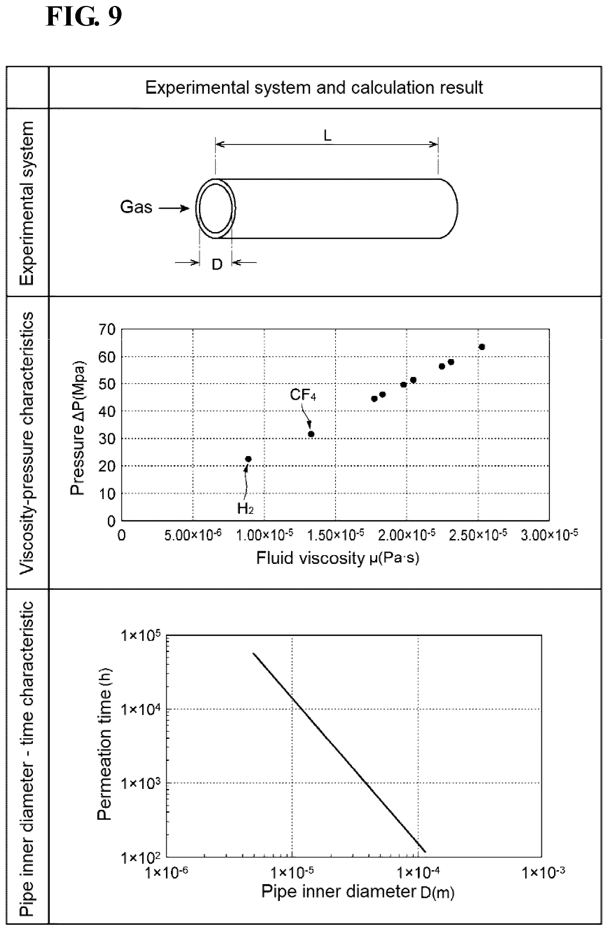

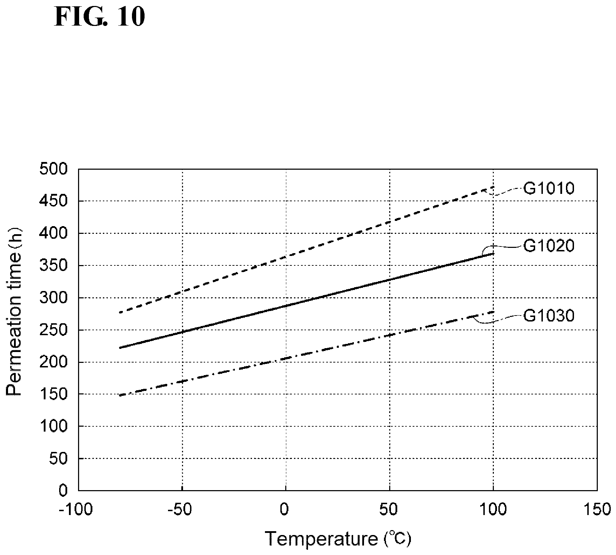

Next, the calculation results of the relationship between the pipe inner diameter of the fiber model and the permeation time for several kinds of gas among various gases listed in FIG. 6 will be described below with reference to FIGS. 7 to 9. FIG. 7 is a table showing the calculation results of the permeation time from the start to the completion of gas filling for various glass pipes having different pipe inner diameters D, pipe length L of 25,000 m, for several kinds of gas among various gases listed in FIG. 6. The upper part of the table shown in FIG. 7 shows the calculation results of the permeation time from the start to the completion of gas filling for a glass pipe having pipe inner diameter D of $8.0 \times 10^{-5}$ m and pipe length L of 25,000 m. The lower part of the table shown in FIG. 7 shows the calculation results of the permeation time from the start to the completion of gas filling for a glass pipe having pipe inner diameter D of $1.0 \times 10^{-5}$ m and pipe length of 25,000 m. FIG. 8 is a table showing the calculation results of the permeation time from the start to the completion of gas filling for various glass pipes having different pipe inner diameters D, and pipe length L of 25,000 m for $CF_4$ among various gases listed in FIG. 6. FIG. 9 is a diagram showing the structure of an experimental system for obtaining the calculation results shown in FIG. 7 and FIG. 8 and a graph showing the calculation results (in FIG. 9, referred to as "experimental system and calculation result"). The upper part of FIG. 9 (in FIG. 9, referred to as "experimental system") shows a schematic structure of a glass pipe prepared as an experimental fiber model. The middle part of FIG. 9 (in FIG. 9, referred to as "viscosity-pressure characteristics") shows the relationship between the fluid viscosity $\mu$ (Pa·s) and the pressure $\Delta P$ (MPa) of the gas listed in the upper part of the table shown in FIG. 7. The lower part of FIG. 9 (in FIG. 9, referred to as "pipe inner diameter - time characteristic") shows the relationship between pipe inner diameters D (m) and the permeation times (h) for $CF_4$, based on the table shown in FIG. 8. Further, FIG. 10 is a graph for explaining the temperature dependence of the permeation time for Ar, $N_2$, and $CF_4$ among the gases listed in FIGS. 7 and 8.

For the calculation of the permeation time (h), a glass pipe having a single pore as shown in the upper part of FIG. 9 is assumed as an experimental fiber model. The glass pipe has a circular cross section, pipe inner diameter D and pipe length L. The pressure loss when a fluid such as gas flows through the glass pipe is expressed by the following formula (1). Further, when the fluid is a laminar flow, the condition of the following formula (2) is satisfied.

[Formula 1]

$$\Delta P = \lambda \cdot \frac{L}{D} \cdot \frac{\rho \cdot u^2}{2} \qquad \cdots (1)$$

$$\left.\begin{array}{l} Re = \dfrac{\rho \cdot u \cdot D}{\mu} \\[2ex] \lambda = \dfrac{64}{Re} \end{array}\right\} \qquad \cdots (2)$$

Here, $\lambda$ is a friction coefficient of the glass pipe with respect to the gas. L is the pipe length (m). D is the pipe inner diameter (m). $\rho$ is the fluid density (kg/m$^3$). u is the average flow velocity (m/s). $\mu$ is the fluid viscosity. Re is a Reynolds number.

For example, when the filling gas is pressurized to about 50 MPa with respect to one end surface of a glass pipe having pipe inner diameter D of $8.0 \times 10^{-5}$ m and pipe length L of 25,000 m, the filling gas can reach the other end surface of the glass pipe only in about 350 h. The calculation result is shown in the upper part of the table of FIG. 7. In both the upper and lower parts of the table of FIG. 7, the gases to be calculated in the upper and lower parts are He, $H_2$, $N_2$, Ar, Kr, Xe, air, $O_2$, and $CF_4$. For these gases, the values of a temperature T (K), molecular weight (g/mol), fluid viscosity $\mu$ (Pa·s), fluid density $\rho$ (kg/m$^3$), average flow velocity (m/s), Reynolds number Re, pressure $\Delta P$ (Pa), pressure $\Delta P$ (MPa), and permea-

tion time (h) are given. As can be seen from the graph shown in the middle part of FIG. 9, the gas listed in the upper part of the table of FIG. 7 shows a correlation between the fluid viscosity $\mu$ (Pa·s) and the pressure $\Delta P$ (MPa).

On the other hand, when the filling gas is pressurized to 50 MPa with respect to one end surface of the glass pipe having pipe inner diameter D of $1.0 \times 10^{-5}$ m and pipe length L of 25,000 m, 20,000 h or more is required for the filling gas to reach the other end face of the glass pipe. The calculation result is shown in the lower part of the table of FIG. 7.

The table shown in FIG. 8 shows values of pipe inner diameter D (m), temperature T (K), molecular weight (g/mol), fluid viscosity $\mu$ (Pa·s), fluid density $\rho$ (kg/m$^3$), average flow velocity (m/s), Reynolds number Re, pressure $\Delta P$ (Pa), pressure $\Delta P$ (MPa), and permeation time (h) for $CF_4$ as the target gas. As can be seen from the graph shown in the lower part of FIG. 9, there is also a correlation between pipe inner diameter D (m) and the permeation time (h). This tendency can be presumed for other gases. Further, from the above equations (1) and (2), it is also understood that the fluid viscosity $\mu$ affects the gas filling speed. The fluid viscosity $\mu$ varies with the kind of gas and the temperature of the gas. In particular, the influence of temperature is large, and the fluid viscosity $\mu$ tends to decrease as the temperature decreases, and thus, cooling fiber intermediate member 150 in FIG. 5 by constant temperature chamber 800 or the like is effective in reducing the permeation time. The time dependence of the permeation time is shown in FIG. 10, and the permeation time is reduced by gas filling in a low temperature state regardless of the kind of gas. As the gas to be filled, one kind of gas among the gases listed in FIG. 6 and the like may be filled in the inner region of fiber intermediate member 150, or a plurality of kinds of gas may coexist in the inner region of fiber intermediate member 150. In particular, in the configuration in which a plurality of kinds of gases coexist in the inner region of fiber intermediate member 150, different gas composition distributions can be formed along the longitudinal direction of obtained anti-resonant hollow-core fiber 100, and in the gas-filled region that substantially becomes core region 110, improvement of transmission characteristics and the like can be expected by utilizing the refractive index change along the longitudinal direction.

In FIG. 10, a line segment G1010 shows the temperature dependence of the permeation time when Ar is selected as the filling gas, a line segment G1020 shows the temperature dependence of the permeation time when $N_2$ is selected as the filling gas, and a line segment G1030 shows the temperature dependence of the permeation time when $CF_4$ is selected as the filling gas. The pipe sample prepared for the measurement had the same structure as the glass pipe shown in the upper part of FIG. 9, and pipe inner diameter D was $8.0 \times 10^{-5}$ m and pipe length L was 25,000 m. In addition, in each of line segment G1010 to line segment G1030, the permeation time when temperature T is 298 K, that is, 25°C is adjusted for easy comparison. In particular, in line segment G1010 showing the temperature characteristic of Ar, various parameters of the fluid viscosity $\mu$, the fluid density $\rho$, the average flow velocity u, the Reynolds number Re, and the pressure $\Delta P$ are adjusted so that the permeation time at temperature T of 25°C becomes 385 h. Similarly, in line segment G1020 indicating the temperature characteristic of $N_2$, various parameters such as the fluid viscosity $\mu$ are adjusted so that the permeation time when temperature T is 25°C becomes 305h. Further, in line segment G1030 showing the temperature characteristic of $CF_4$, various parameters such as the fluid viscosity are adjusted so that the permeation time at temperature T of 25°C becomes 225h. As can be seen from FIG. 10, the slope of line segment G1010, which indicates the degree of temperature dependency, is larger than the slopes of line segment G1020 and line segment G1030. In other words, it is found that the temperature dependency of Ar is larger than the temperature dependencies of $N_2$ and $CF_4$.

In anti-resonant hollow-core fiber 100 of the present disclosure, the ratio of the total cross-sectional area of the plurality of inner cladding elements 121 to the cross-sectional area of inner region 120b of outer cladding 120 is set to be 0.55 or more as the area ratio. As described above, in the case of anti-resonant hollow-core fiber 100, the gas-filled space serving as the hollow optical waveguide region is sufficiently secured, and the fiber length that can be actually manufactured can be increased to a length one km or more.

Further, in anti-resonant hollow-core fiber 100 of the present disclosure, inner region 120b of outer cladding 120 may have a diameter of 80 $\mu$m or more. When inner region 120b has a diameter of 80 $\mu$m or more, the optical fiber can be efficiently manufactured even when the fiber length is one km or more.

As can be understood from the description of the embodiments described above, the present specification includes the disclosure of the following aspects.

(Appendix 1)

An anti-resonant hollow-core fiber comprising:

an outer cladding having a pipe shape extending along a fiber central axis; and
a plurality of inner cladding elements each having a pipe shape and disposed so as to surround a space to be a core region in a state of being in contact with an inner wall surface of the outer cladding.

The anti-resonant hollow-core fiber has a length of 1 km or more,
and in the cross section of the outer cladding orthogonal to the fiber central axis, in the inner region surrounded by the inner wall surface of the outer cladding, a region excluding a partial region occupied by the plurality of inner cladding elements, is filled with a gas having a light absorptance lower than a light absorptance of $H_2$ in a wavelength band of 1 $\mu$m to 2 $\mu$m and a diffusion coefficient smaller than a diffusion coefficient of Ne.

REFERENCE SIGNS LIST

10 optical fiber preform
12 outer cladding portion
12a inner wall surface
12b inner cladding portion
13 jacket portion
100 anti-resonant hollow-core fiber
110 core region
120 outer cladding
120a inner wall surface
120b inner region
121 inner cladding element (partial region)
121a center
121b internal space (partial region)
130 jacket layer
140 resin covering
150 fiber intermediate member
210 core region
220 common cladding
221 air hole
300 pressurizer
400 heater
500 resin covering device
600 winding device
610 roller
710 high pressure gas supply system
720 vacuum pump
730 gas analyzer
741, 742 on-off valve
800 constant temperature chamber
810 housing
820 cooling source
830 heating source
840 temperature sensor
850 temperature control portion
AX fiber central axis
S arrow

**Claims**

1. An anti-resonant hollow-core fiber comprising:

an outer cladding having a pipe shape extending along a fiber central axis; and
a plurality of inner cladding elements having a pipe shape and disposed in an inner region surrounded by an inner wall surface of the outer cladding, the inner cladding elements being in contact with the inner wall surface so as to surround a space to be a core region,
wherein, in a cross section of the inner region orthogonal to the fiber central axis, a region excluding a partial region occupied by the plurality of inner cladding elements, the partial region including an internal space of the plurality of inner cladding elements, is filled with a gas having a light absorptance lower than a light absorptance of $H_2$ in a wavelength band of 1 $\mu$m to 2 $\mu$m and a diffusion coefficient smaller than a diffusion coefficient of Ne.

2. The anti-resonant hollow-core fiber according to claim 1,
wherein the anti-resonant hollow-core fiber has a length of 1 km or more.

3. The anti-resonant hollow-core fiber according to claim 1 or 2,
wherein, in the cross section, a ratio of a total cross-sectional area of the plurality of inner cladding elements to a cross-sectional area of the inner region is 0.55 or more.

4. The anti-resonant hollow-core fiber according to claim 3,
wherein the plurality of inner cladding elements includes 3 to 6 inner cladding elements.

5. The anti-resonant hollow-core fiber according to claim 3 or 4,
wherein the inner region has a diameter of 80 $\mu$m or more.

6. The anti-resonant hollow-core fiber according to any one of claims 1 to 5,
wherein the gas includes at least one of Ar, Kr, Xe, $N_2$, $O_2$, $CF_4$, $C_2F_6$, $CCl_2F_2$, or $CClF_3$.

7. The anti-resonant hollow-core fiber according to any one of claims 1 to 6,
wherein a pressure of the gas is more than 0.101 MPa and less than 70 MPa at a temperature of 25 degrees Celsius.

**FIG. 1**

# FIG. 2

| Cross section structure |
|---|
| **Anti-resonant type** |
| **Photonic crystal type** |

# FIG. 3

| | Area ratio calculation |
|---|---|
| Cross section model | |
| Enlarged view | |

**FIG. 4**

# FIG. 5

# FIG. 6

| Kind of gas | | Molecular diameter (nm) | Diffusion coefficient (cm²/s) | | Activation energy (KJ/mol) |
|---|---|---|---|---|---|
| | | | Temperature 25°C | Temperature 1000°C | |
| Noble gases | He | 0.23 | $2.4×10^{-7}$ | $3.2×10^{-5}$ | 16 |
| | Ne | 0.25 | $7.4×10^{-11}$ | $5.9×10^{-6}$ | 37 |
| | Ar | 0.32 | $< 1×10^{-20}$ | $1.6×10^{-8}$ | 109 |
| | Kr | 0.42 | $< 1×10^{-20}$ | $3.2×10^{-12}$ | 212 |
| | Xe | 0.49 | $< 1×10^{-20}$ | $8.4×10^{-15}$ | 285 |
| General gases | $H_2,D_2$ | 0.26 | $1.3×10^{-12}$ | $2.5×10^{-6}$ | 47 |
| | $N_2$ | 0.36 | $< 1×10^{-20}$ | $5.2×10^{-10}$ | 150 |
| | $O_2$ | 0.35 | $< 1×10^{-20}$ | $1.2×10^{-9}$ | 140 |
| Halogenated carbon | $CF_4$ | 0.46 | $< 1×10^{-20}$ | $1.1×10^{-13}$ | 254 |
| | $CCl_2F_2$ | 0.48 | $< 1×10^{-20}$ | $2.0×10^{-14}$ | 274 |
| | $CClF_3$ | 0.47 | $< 1×10^{-20}$ | $4.6×10^{-14}$ | 264 |
| Other (light absorption occurs) | $CH_4$ | 0.38 | $< 1×10^{-20}$ | $9.6×10^{-11}$ | 171 |
| | $CO_2$ | 0.33 | $< 1×10^{-20}$ | $6.7×10^{-9}$ | 119 |
| | CO | 0.38 | $< 1×10^{-20}$ | $9.6×10^{-11}$ | 171 |
| | $C_2H_4$ | 0.4 | $< 1×10^{-20}$ | $1.8×10^{-11}$ | 192 |

# FIG. 7

| | Kind of gas | Temperature T (K) | Molecular weight (g/mol) | Fluid viscosity $\mu$ (Pa·s) | Fluid density p (kg/m³) | Average flow velocity u (m/s) | Reynolds number Re | Pressure $\Delta P$ (Pa) | Pressure $\Delta P$ (Mpa) | Permeation time (h) |
|---|---|---|---|---|---|---|---|---|---|---|
| Pipe inner diameter D=8.0×10⁻⁵m Pipe length L=25,000m | He | 298 | 4.0026 | $1.97\times10^{-5}$ | 0.1637 | 0.02 | $1.33\times10^{-2}$ | $4.94\times10^7$ | 49.352 | 347.22 |
| | H₂ | 298 | 2.0159 | $8.88\times10^{-6}$ | 0.09 | 0.02 | $1.62\times10^{-2}$ | $2.22\times10^7$ | 22.198 | 347.22 |
| | N₂ | 298 | 28.013 | $1.77\times10^{-5}$ | 1.2506 | 0.02 | $1.13\times10^{-1}$ | $4.43\times10^7$ | 44.294 | 347.22 |
| | Ar | 298 | 39.948 | $2.25\times10^{-5}$ | 1.7834 | 0.02 | $1.27\times10^{-1}$ | $5.62\times10^7$ | 56.242 | 347.22 |
| | Kr | 298 | 83.8 | $2.53\times10^{-5}$ | 3.7411 | 0.02 | $2.37\times10^{-1}$ | $6.32\times10^7$ | 63.225 | 347.22 |
| | Xe | 298 | 131.3 | $2.31\times10^{-5}$ | 5.8616 | 0.02 | $4.06\times10^{-1}$ | $5.78\times10^7$ | 57.779 | 347.22 |
| | air | 298 | 28.85 | $1.83\times10^{-5}$ | 1.288 | 0.02 | $1.13\times10^{-1}$ | $4.57\times10^7$ | 45.742 | 347.22 |
| | O₂ | 298 | 31.999 | $2.05\times10^{-5}$ | 1.4285 | 0.02 | $1.12\times10^{-1}$ | $5.12\times10^7$ | 51.189 | 347.22 |
| | CF₄ | 298 | 88.004 | $1.29\times10^{-5}$ | 3.9288 | 0.02 | $4.87\times10^{-1}$ | $3.22\times10^7$ | 32.247 | 347.22 |
| Pipe inner diameter D=1.0×10⁻⁵m Pipe length L=25,000m | He | 298 | 4.0026 | $1.97\times10^{-5}$ | 0.1637 | 0.00031 | $2.59\times10^{-5}$ | $4.94\times10^7$ | 49.352 | 22,222 |
| | H₂ | 298 | 2.0159 | $8.88\times10^{-6}$ | 0.09 | 0.00031 | $3.17\times10^{-5}$ | $2.22\times10^7$ | 22.198 | 22,222 |
| | N₂ | 298 | 28.013 | $1.77\times10^{-5}$ | 1.2506 | 0.00031 | $2.21\times10^{-4}$ | $4.43\times10^7$ | 44.294 | 22,222 |
| | Ar | 298 | 39.948 | $2.25\times10^{-5}$ | 1.7834 | 0.00031 | $2.48\times10^{-4}$ | $5.62\times10^7$ | 56.242 | 22,222 |
| | Kr | 298 | 83.8 | $2.53\times10^{-5}$ | 3.7411 | 0.00031 | $4.62\times10^{-4}$ | $6.32\times10^7$ | 63.225 | 22,222 |
| | Xe | 298 | 131.3 | $2.31\times10^{-5}$ | 5.8616 | 0.00031 | $7.93\times10^{-4}$ | $5.78\times10^7$ | 57.779 | 22,222 |
| | air | 298 | 28.85 | $1.83\times10^{-5}$ | 1.288 | 0.00031 | $2.20\times10^{-4}$ | $4.57\times10^7$ | 45.742 | 22,222 |
| | O₂ | 298 | 31.999 | $2.05\times10^{-5}$ | 1.4285 | 0.00031 | $2.18\times10^{-4}$ | $5.12\times10^7$ | 51.189 | 22,222 |
| | CF₄ | 298 | 88.004 | $1.29\times10^{-5}$ | 3.9288 | 0.00031 | $9.52\times10^{-4}$ | $3.22\times10^7$ | 32.247 | 22,222 |

**FIG. 8**

| | Kind of gas | Pipe inner diameter D (m) | Temperature T (K) | Molecular weight (g/mol) | Fluid viscosity μ (Pa·s) | Fluid density p (kg/m³) | Average flow velocity u (m/s) | Reynolds number Re | Pressure ΔP (Pa) | Pressure ΔP (Mpa) | Permeation time (h) |
|---|---|---|---|---|---|---|---|---|---|---|---|
| Pipe length L=25,000m | CF₄ | $5.0 \times 10^{-6}$ | 298 | 88.00 | $1.29 \times 10^{-5}$ | 3.5992 | $1.21 \times 10^{-4}$ | $1.69 \times 10^{-4}$ | $5.00 \times 10^{7}$ | 50 | 57328 |
| | | $7.1 \times 10^{-6}$ | 298 | 88.00 | $1.29 \times 10^{-5}$ | 3.5992 | $2.42 \times 10^{-4}$ | $4.78 \times 10^{-4}$ | $5.00 \times 10^{7}$ | 50 | 28664 |
| | | $1.0 \times 10^{-5}$ | 298 | 88.00 | $1.29 \times 10^{-5}$ | 3.5992 | $4.85 \times 10^{-4}$ | $1.35 \times 10^{-3}$ | $5.00 \times 10^{7}$ | 50 | 14332 |
| | | $1.4 \times 10^{-5}$ | 298 | 88.00 | $1.29 \times 10^{-5}$ | 3.5992 | $9.69 \times 10^{-4}$ | $3.82 \times 10^{-3}$ | $5.00 \times 10^{7}$ | 50 | 7166 |
| | | $2.0 \times 10^{-5}$ | 298 | 88.00 | $1.29 \times 10^{-5}$ | 3.5992 | $1.94 \times 10^{-3}$ | $1.08 \times 10^{-2}$ | $5.00 \times 10^{7}$ | 50 | 3583 |
| | | $2.8 \times 10^{-5}$ | 298 | 88.00 | $1.29 \times 10^{-5}$ | 3.5992 | $3.88 \times 10^{-3}$ | $3.06 \times 10^{-2}$ | $5.00 \times 10^{7}$ | 50 | 1791.5 |
| | | $4.0 \times 10^{-5}$ | 298 | 88.00 | $1.29 \times 10^{-5}$ | 3.5992 | $7.75 \times 10^{-3}$ | $8.65 \times 10^{-2}$ | $5.00 \times 10^{7}$ | 50 | 895.75 |
| | | $5.7 \times 10^{-5}$ | 298 | 88.00 | $1.29 \times 10^{-5}$ | 3.5992 | $1.55 \times 10^{-2}$ | $2.45 \times 10^{-1}$ | $5.00 \times 10^{7}$ | 50 | 447.87 |
| | | $8.0 \times 10^{-5}$ | 298 | 88.00 | $1.29 \times 10^{-5}$ | 3.5992 | $3.10 \times 10^{-2}$ | $6.92 \times 10^{-1}$ | $5.00 \times 10^{7}$ | 50 | 223.94 |
| | | $1.1 \times 10^{-4}$ | 298 | 88.00 | $1.29 \times 10^{-5}$ | 3.5992 | $6.20 \times 10^{-2}$ | $1.96 \times 10^{+0}$ | $5.00 \times 10^{7}$ | 50 | 111.97 |

# FIG. 9

| | Experimental system and calculation result |
|---|---|
| Experimental system | |
| Viscosity-pressure characteristics | |
| Pipe inner diameter - time characteristic | |

FIG. 10

## INTERNATIONAL SEARCH REPORT

| | International application No. |
|---|---|
| | **PCT/JP2023/033160** |

**A. CLASSIFICATION OF SUBJECT MATTER**

*G02B 6/032*(2006.01)i
FI: G02B6/032 Z

According to International Patent Classification (IPC) or to both national classification and IPC

**B. FIELDS SEARCHED**

Minimum documentation searched (classification system followed by classification symbols)

G02B6/032

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore

**C. DOCUMENTS CONSIDERED TO BE RELEVANT**

| Category* | Citation of document, with indication, where appropriate, of the relevant passages | Relevant to claim No. |
|---|---|---|
| X | WO 2022/048847 A1 (ASML NETHERLANDS B. V.) 10 March 2022 (2022-03-10) paragraphs [00058]-[00070], [00073]-[00080], fig. 7, 8 | 1-6 |
| Y | paragraph [00056] | 7 |
| X | LI et al. Heterogeneous Gas-filling in Anti-resonant Hollow Core Fibers. 2020 Opto-Electronics and Communications Conference (OECC). 2020, pp. 1-3, DOI:10.1109/OECC48412.2020.9273739 p. 2, Characterization of Heterogeneous Gas-Filling, fig. 3, 4 | 1, 4, 6 |
| Y | ZURCH et al. Octave Broadband Supercontinuum Generation in Gas-Filled Anti-Resonant Hollow-Core Fiber. 2016 Conference on Lasers and Electro-Optics (CLEO). 2016, pp. 1, 2 lines 5-13, fig. 1 | 7 |
| A | HABIB et al. Generation of multiple VUV dispersive waves using a tapered gas-filled hollow-core anti-resonant fiber. 2017 Conference on Lasers and Electro-Optics Europe & European Quantum Electronics Conference (CLEO/Europe-EQEC). 2017, DOI:10.1109/CLEOE-EQEC.2017.8086491 entire text, all drawings | 1-7 |

☑ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/033160**

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|----------------------|
| A | KHOSRAVI et al. Hollow-Core Photonic Crystal Fibers Filled with Noble Gases: He, Ne, Ar, Kr, Xe. 2019 Photonics North (PN). 2019, vol. CFP1909V-ART, DOI:10.1109/PN.2019.8819515<br>entire text, all drawings | 1-7 |

## INTERNATIONAL SEARCH REPORT
### Information on patent family members

| International application No. |
| --- |
| **PCT/JP2023/033160** |

| Patent document cited in search report | Publication date (day/month/year) | Patent family member(s) | Publication date (day/month/year) |
| --- | --- | --- | --- |
| WO 2022/048847 A1 | 10 March 2022 | JP 2023-540186 A paragraphs [00058], [00060]-[00072], [00075]-[00082], fig. 7, 8 US 2022/0069537 A1 EP 3988996 A1 CN 116057462 A KR 10-2023-0061399 A TW 202215086 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022157789 A

- JP 2017052084 W

**Non-patent literature cited in the description**

- **O. H. HECKL et al.** Temporal pulse compression in a xenon-filled Kagome-type hollow-core photonics crystal fiber at high average power. *OPTICS EXPRESS*, 26 September 2011, vol. 19 (20), 19142-19148

- **GREGORY T. JASION et al.** Fabrication of tubular anti-resonant hollow core fibers: modelling, draw dynamics and process optimization. *OPTICS EXPRESS*, 22 July 2019, vol. 27 (15), 20567-20581